# EUROPEAN PATENT SPECIFICATION

(11) **EP 2 178 738 B1**
(45) Date of publication and mention of the grant of the patent: **06.04.2011**
(21) Application number: 08708505.6
(22) Date of filing: 31.01.2008
(51) Int. Cl.: B62J 6/06

(54) **A GENERATOR FOR A BICYCLE**
FAHRRADDYNAMO
GENERATEUR POUR BICYCLETTE

(30) Priority: 30.07.2007 DK 200701103
(43) Date of publication of application: 28.04.2010
(73) Proprietor: Reelight APS, 8260 Viby (DK)
(72) Inventor: PEDERSEN, Troels, DK-2990 Nivå (DK)
(74) Representative: Plougmann & Vingtoft A/S
(86) International application number: PCT/EP2008/051194
(87) International publication number: WO 2009/015910

(56) References cited:
- WO-A-01/33700
- WO-A-2004/068681
- WO-A-2005/075284

## Description

### INTRODUCTION

The present invention relates to a generator for a bicycle, and in particular to a generator of the kind which comprises a driving magnet and an induction structure with an induction magnet which is movably fixed to a coil. The driving magnet and the induction structure comprises a fixing structure allowing fixing of the driving magnet and the induction structure to the bicycle at locations where they, during normal operation of the bicycle, repeatedly moves towards and away from each other so that the driving magnet, by magnetic interaction, is capable of moving the induction magnet relative to the coil.

### BACKGROUND OF THE INVENTION

Generators or dynamos used for bicycles are well known. Several different variants of generators exist, ranging from very simple dynamos where a multiple pole permanent magnet is rotated relative to a single coil via a small wheel in frictional engagement with a rim of the tire of the bicycle. Other types of generators are based on magnets which are attached directly to the wheel or tire and which induces a current in a coil which is attached to the frame of the bicycle. Yet another type of generator is based on simple multiple pole generators which are arranged in the hub of the front wheel. These generators turn relatively slowly with the rotation of the front wheel.

Generally, the electricity is induced when a movement of a magnet relative to a coil changes the magnitude or direction of a magnetic flux passing through the coil. In the following, the magnet which induces a current in the coil is referred to as the induction magnet. The induction power depends on the strength of the induction magnet, the structure of the coil, on the speed by which the induction magnet is moved relative to the coil, and on the distance between the induction magnet and the coil. As mentioned already, many of the traditional generators for bicycles are based on induction magnets which are attached to one of the moving parts of the bicycle and the coil is attached to the other one of the moving parts of the bicycle e.g. the frame. In this case, the size of the gap depends on the structure of the bicycle, and the strength of the induced field may therefore vary between different bicycles to which identical generators are attached, or as the user/operator accidentally changes the size of the gap e.g. when repairing the bicycle. In particular any bumping of the bicycle light into hard objects may lead to change in size of gap, and this may reduce the power output.

In a certain kind of generator, the inducting magnet is arranged to freely tumble in a cavity in the coil. The tumbling induction magnet is moved by a magnet field between the tumbling magnet and other magnets which are fixed to the wheel of the bicycle and which therefore move relative to the induction magnet when the wheel rotates. In the following, the magnet which moves with the moving part of the bicycle is referred to as the driving magnet. It is difficult to control the tumbling as the tumbling magnet not always has the optimal magnetic orientation compared to the magnet in the wheel. As a consequence, situations may arise in which the tumbling magnet is not moved very much, and periods where it moves very much. This kind of operation is undesirable as the light output possible may be influenced by these induction wise 'dry' periods. A "tumbling magnet" generator is shown in WO 2004/068681, and a variety of the generator is shown in WO0133700 which describes all the features of the preamble of claim 1.

### DESCRIPTION OF THE INVENTION

It is an object of the invention to provide an improved generator for a bicycle, and in particular to provide a generator which can potentially deliver a uniform output which is less dependent on a very specific installation of the generator on the bicycle and which may therefore be easy to install.

According to a first aspect, the invention provides a generator of the kind mentioned in the introduction which further comprises a resetting magnet which influences the positioning of the induction magnet relative to the coil when the driving magnet moves away from the induction magnet.

During ride, the driving magnet will move towards, and pass the induction magnet - preferably in close vicinity. During this movement, the magnetic field between the driving magnet and the induction magnet becomes sufficiently strong to interfere with the balance of the induction magnet and the resetting magnet, the induction magnet is therefore moved relative to the coil. By this movement, the coil is influenced by the magnetic field from the induction magnet, and a current is induced which may be used to drive lights or other electronic devices on the bicycle.

When the driving magnet has passed the induction structure and moves in a direction away from the induction magnet, the opposite situation occurs. At a certain distance, the magnetic field between the driving magnet and the induction magnet becomes insufficiently strong to maintain the position of the induction magnet, and the forces from the magnetic interaction between the induction magnet and the resetting magnet moves the induction magnet back to a reset position. During this movement, a current is once again induced in the coil. As a consequence of the uniform orientation of induction magnet relative to the coil, the induced electrical current may have fewer fluctuations, and in practice, a more reliable and easier installation of the generator may be facilitated since the generator is more tolerant towards positioning of the magnets relative to each other.

The driving magnet, the induction magnet and/or the resetting magnet may be permanent magnets of a kind which is well known from traditional generators for bicycles.

The generator may comprise any number of each type of magnet, e.g. a plurality of driving magnets and a single induction magnet and a single resetting magnet or a plurality of all types of magnets.

The generator may also comprise several coils, e.g. one coil for each induction magnet. The coil may be a standard coil of a kind well known for generators for bicycles, and the fixing structure may comprise standard components similar to those which are already used for attaching a magnet or an induction structures to a wheel, a frame, or a front or rear fork of a bicycle.

Typically, it may be an advantage to fix the driving magnet to one or more of the spokes of the wheel by use of a metal or plastic fitting, or to attach the driving magnet adhesively to the tire. In one embodiment, the driving magnets are attached to the bicycle by use of a fitting made of a magnetically conductive material since this may increase the strength of the magnetic field.

The induction structure may be fixed to the frame by use of a metal or plastic fitting. The magnets may be identical magnets, or the magnets may be of different type, size and/or shape.

As an example, the driving magnet may be larger than the induction magnet or at least have a larger magnetic coercivity than the induction magnet and the resetting magnet, and/or the induction magnet may be larger than or have a larger magnetic coercivity than that of the resetting magnet. By larger is herein meant e.g. with a larger thickness, width, or height, or with a larger surface area.

The locations where the driving magnet and the induction structure are fixed to the bicycle may, as mentioned already, advantageously be a location on the wheel and a location on the frame. It could also be a location on one of the crank shafts and a location on the frame, or a location on one of the pedals. The driving magnet or induction structure could be fixed to the wheel and the other one of the driving magnet and the induction structure could be fixed to the frame. It would, however, often be an advantage to fix the induction structure to the frame rather than to an element which rotates.

The induction magnet is preferably rotationally hinged to the coil so that the induction of a current occurs under rotational movement of the induction magnet relative to the coil. By suitable dimensioning and suspension of the induction magnet relative to the coil, it may be facilitated that the induction magnet moves freely without interference from obstacles during the rotation relative to the coil. This facilitates a silent generator and less wear.

In one embodiment, the induction structure comprises a housing forming a sealed chamber which houses the coil, the induction magnet, and optionally also the resetting magnet. The chamber may be filled with an anticorrosive, e.g. a thin liquid solution, e.g. oil.

The resetting magnet may be a separate element which is attachable to the bicycle near the induction structure at a location whereby the mentioned resetting function is achieved. It may, for simplicity in the assembly procedure, be an advantage to either fix the resetting magnet directly to the induction structure or to provide the resetting magnet as a part of the induction structure, i.e. movably fixed to the induction magnet - e.g. as mentioned already by providing the resetting magnet in the same chamber of a joint housing. This also provides a uniform distance and thus a uniform resetting force between the induction magnet and the resetting magnet.

In one embodiment, the resetting magnet is rotationally attached to the coil so that the resetting magnet moves relative to the coil when the induction magnet moves. By this feature, not only the induction magnet but also the resetting magnet, and inherently also the driving magnet contributes to a magnetic field which is induced in the coil. The coil may be arranged circumferentially around the induction magnets and/or circumferentially around the resetting magnet.

In one embodiment, the induction magnet comprises two magnetic elements arranged on opposite sides of a core of a magnetically conductive material. This provides a larger induction magnet by use of smaller permanent magnets.

The induction magnet may be influenced by the resetting magnet by a magnetic force which is conducted at least partly by a conductor of a magnetically conductive material. The conductor is described further relative to the drawings and it may e.g. comprise a semi circular element which extends at least partly around the induction magnet.

The induction magnet may be fixed to rotate around an axis, and preferably around an axis which is transverse to, or even perpendicular to the direction of the magnetic flux of the induction magnet, i.e. perpendicular to a line defined where the flux is strongest, i.e. the axis extends radially away from the corona of the magnetic flux. In this case the induction magnet may be fixed to rotate around an axis which is perpendicular to the centre plane.

The induction structure may comprise a consumer of the generated electrical current. As an example, the induction structure may include a light, a computer, a transmitter, or receiver, or a sensor, e.g. for sensing speed of the bicycle etc.

In a second aspect, the invention provides a bicycle with a generator according to any of claim 1-9. In particular, the bicycle may have driving magnets fixed to at least one of the wheels and the induction structure fixed to the frame.

### DETAILED DESCRIPTION OF THE INVENTION

In the following one preferred embodiment of the invention is described in further details with reference to the drawings in which:
Fig 1, illustrates a generator according to the invention;
Fig 2 illustrates an alternative embodiment of the generator;
Fig 3: illustrates a generator where the resetting magnet is supplied with conductive magnetic parts to control the magnetic field; and
Fig 4: Illustrates a design of the driving magnet integrated with a bracket used in the invention.

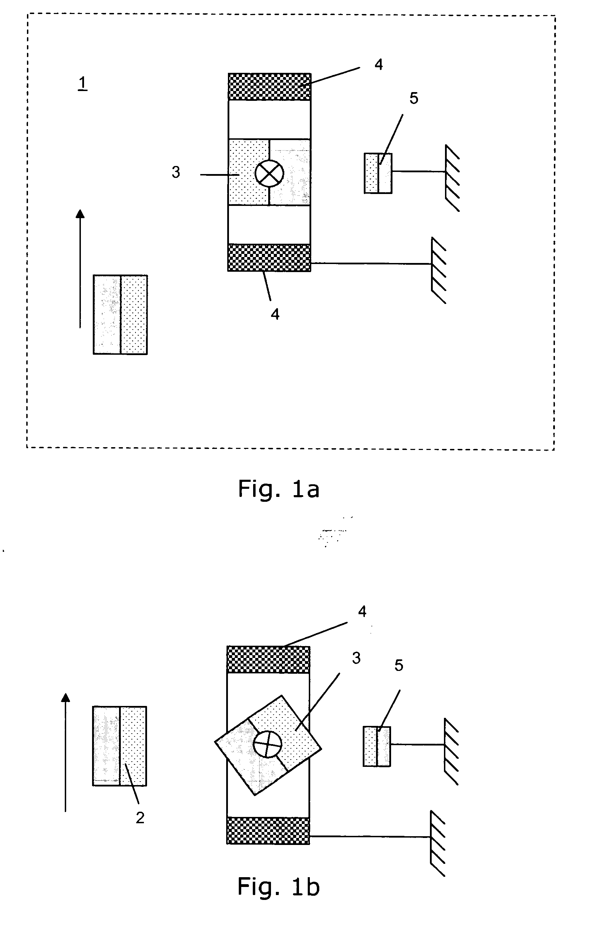

Fig la illustrates the system 1 in a preferred embodiment. One or more driving magnets 2 are attached to the wheel of a bicycle. One or more induction magnets 3 are fixated to the frame of the bicycle so that they may rotate freely on an axis radial to the direction of magnetization. One or more resetting magnets 5 are fixated to the frame of the bicycle, near the induction magnets to influence the induction magnets so that each of them may have one or more preferred positions. In Fig. 1a, the coil 4 is wounded around the induction magnets so the magnetic flux through this coil is influenced by the position of the induction magnets together with the static magnetic field from the resetting magnet.

As long as any of the driving magnets are out of range and thereby unable to magnetically influence the magnetic balance of the induction magnets and the resetting magnets, the position of the induction magnet is determined by the magnetic balance of the induction magnet and the resetting magnets. As one of the driving magnets gets close to the induction magnet or resetting magnet, the balance is interrupted and the induction magnet is rotated. As a result, the magnetic flux through the coil is changed and an electrical current is induced in the coil.

In Fig. 1b, the passage of a driving magnet is illustrated as this driving magnet is influencing the induction magnet more than the induction magnet is influenced by the resetting magnet. As a result the induction magnet may rotate, e.g. 180 degrees.

When the magnetic influence from the driving magnet is decreased - as the driving magnet moves away from the induction magnet - the induction magnet will return to the one of the preferred positions, as the induction magnet is now only or mainly under influence of the resetting magnet.

Each time a driving magnet passes the induction magnet, the induction magnet will turn, and this creates a change in the flux through the coil and thereby leads to repeated inductions in the coil.

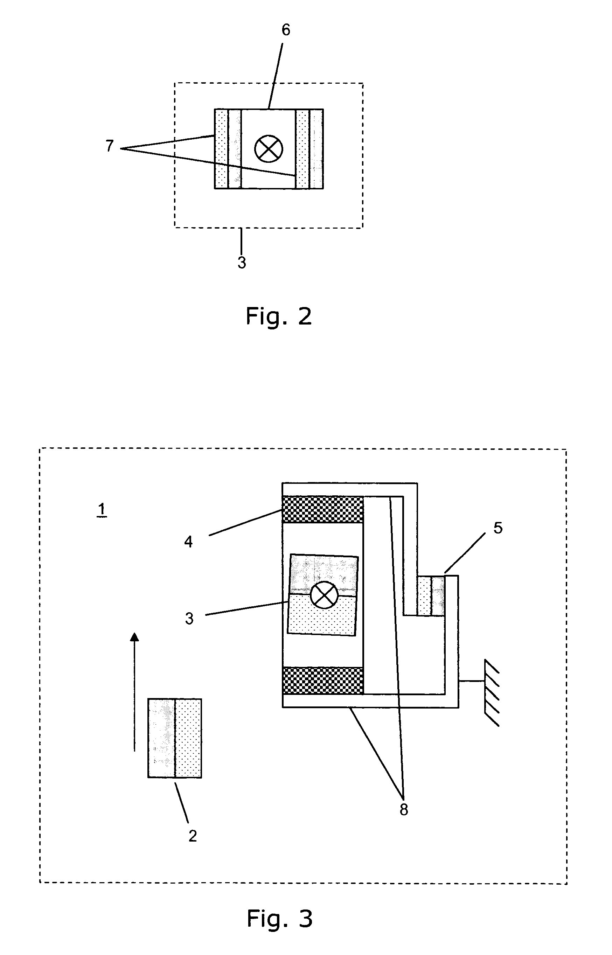

Fig. 2 illustrates how the induction magnet 3 is made of two smaller permanent magnets 7 attached to a magnetic conductive center part 6 e.g. made of steel. This construction saves magnetic material as the steel in the middle will replace much of the magnetic material, and the design further more makes it easier to make a rotational bearing for the induction magnet.

Fig. 3 illustrates another preferred embodiment of the invention in which the resetting magnet 5 is equipped with a magnetic conductive extension 8, preferable made of steel or similar magnetic conductive material. The generator works in the same way as that of Fig. 1 though the induction magnet will have one or more preferred positions determined by the shape of the magnetic extensions 8 of the resetting magnet 5.

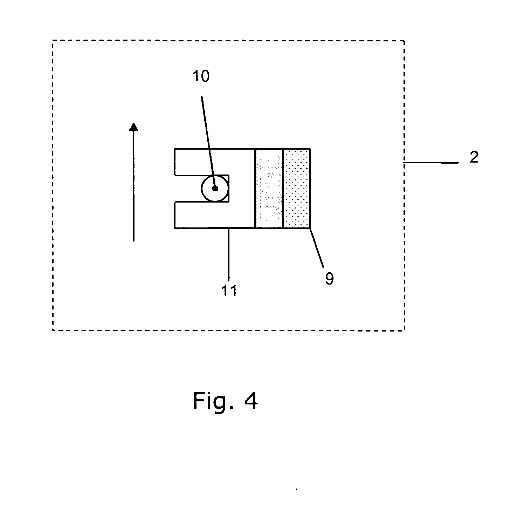

Fig. 4 illustrates how the driving magnets 3 may comprise a permanent magnet 9 and a back piece 11 made of a magnetic conductive material, e.g. steel. This back piece 11 works as a fitting or bracket for mounting the driving magnet to a sprocket 10 of the wheel of the bicycle. As the back piece 11 is made out of metal, e.g. iron or steel, it will increase the power of the permanent magnet. The back piece will, together with the permanent magnet - act as one big driving magnet, stronger than the permanent magnet taken alone.

## Claims

1. A generator (1) for generation of electricity on a bicycle, the generator comprising a driving magnet (2) and an induction structure with an induction magnet (3) which is movably fixed to a coil (4), the driving magnet (2) and the induction structure comprising a fixing structure allowing fixing of the driving magnet (2) and the induction structure to the bicycle at locations where they, during normal operation of the bicycle, repeatedly moves towards and away from each other so that the driving magnet (2), by magnetic interaction, is capable of moving the induction magnet (3) relative to the coil (4), **characterized in that** the generator (1) further comprises a resetting magnet (5) which influences the positioning of the induction magnet (3) relative to the coil (4) when the driving magnet (2) moves away from the induction magnet (3).

2. A generator according to claim 1, wherein the resetting magnet (5) forms part of the induction structure.

3. A generator according to claim 1 or 2, wherein the coil (4) is arranged circumferentially around the induction magnet.

4. A generator according to any of claims 2-3, wherein the induction magnet (3) comprises two magnetic elements (7) arranged on opposite sides of a core (6) of a magnetically conductive material.

5. A generator according to any of claims 2-4, wherein the induction magnet (3) is influenced by the resetting magnet (5) by a magnetic force which is conducted at least partly by a conductor (8) of a magnetically conductive material.

6. A generator according to claim 5, wherein the conductor (8) comprises an element which extends on opposite sides of the induction magnet (3).

7. A generator according to claim 6, wherein the conductor (8) comprises an element which extends on opposite sides of the coil (4).

8. A generator according to any of claims 2-7, wherein the induction magnet (3) is fixed to rotate around an axis.

9. A generator according to claim 8, wherein the axis is perpendicular to the direction of the magnetic flux of the induction magnet (3).

10. A generator according to any of the preceding claims, wherein each driving magnet (2) has a larger magnetic coercivity or bigger size than that of the resetting magnet (5).

11. A generator according to any of the preceding claims, wherein the driving magnet (2) comprises a fixture (11) for fixing a permanent magnet (9) to the wheel (10) of the bicycle, the fixture being made of a magnetically conductive material.

12. A bicycle provided with a generator according to any of claim 1-11.

## Patentansprüche

1. Generator (1) zur Erzeugung von Strom auf einem Fahrrad, wobei der Generator einen Antriebsmagneten (2) und eine Induktionsstruktur mit einem Induktionsmagneten (3), der beweglich an einer Spule (4) befestigt ist, umfasst, wobei der Antriebsmagnet (2) und die Induktionsstruktur eine Befestigungsstruktur umfassen, die das Befestigen des Antriebsmagneten (2) und der Induktionsstruktur am Fahrrad an Stellen ermöglichen, wo sie sich während des normalen Betriebs des Fahrrads wiederholt aufeinander zu und voneinander weg bewegen, sodass der Antriebsmagnet (2) durch magnetische Wechselwirkung den Induktionsmagneten (3) im Verhältnis zur Spule (4) bewegen kann, **dadurch gekennzeichnet, dass** der Generator (1) weiterhin einen Rückstellmagneten (5) umfasst, der die Positionierung des Induktionsmagneten (3) im Verhältnis zur Spule (4) beeinflusst, wenn sich der Antriebsmagnet (2) vom Induktionsmagneten (3) weg bewegt.

2. Generator nach Anspruch 1, wobei der Rückstellmagnet (5) einen Teil der Induktionsstruktur bildet.

3. Generator nach Anspruch 1 oder 2, wobei die Spule (4) um den Umfang des Induktionsmagneten angeordnet ist.

4. Generator nach einem der Ansprüche 2-3, wobei der Induktionsmagnet (3) zwei magnetische Elemente (7) umfasst, die an gegenüberliegenden Seiten eines Kerns (6) eines magnetisch leitfähigen Materials angeordnet sind.

5. Generator nach einem der Ansprüche 2-4, wobei der Induktionsmagnet (3) durch den Rückstellmagneten (5) über eine magnetische Kraft beeinflusst wird, die mindestens zum Teil von einem Leiter (8) aus einem magnetisch leitfähigen Material geleitet wird.

6. Generator nach Anspruch 5, wobei der Leiter (8) ein Element umfasst, das sich an gegenüberliegenden Seiten des Induktionsmagneten (3) erstreckt.

7. Generator nach Anspruch 6, wobei der Leiter (8) ein Element umfasst, das sich an gegenüberliegenden Seiten der Spule (4) erstreckt.

8. Generator nach einem der Ansprüche 2-7, wobei der Induktionsmagnet (3) derart befestigt ist, dass er um eine Achse rotiert.

9. Generator nach Anspruch 8, wobei die Achse senkrecht zur Richtung des magnetischen Flusses des Induktionsmagneten (3) verläuft.

10. Generator nach einem der vorhergehenden Ansprüche, wobei jeder Antriebsmagnet (2) eine größere magnetische Koerzitivfeldstärke oder größere Größe besitzt als die des Rückstellmagneten (5).

11. Generator nach einem der vorhergehenden Ansprüche, wobei der Antriebsmagnet (2) eine Befestigung (11) zum Befestigen eines Permanentmagneten (9) am Rad (10) des Fahrrads umfasst, wobei die Befestigung aus einem magnetisch leitfähigen Material hergestellt ist.

12. Fahrrad, das mit einem Generator nach einem der Ansprüche 1-11 versehen ist.

## Revendications

1. Générateur (1) destiné à produire de l'électricité sur une bicyclette, le générateur comprenant un aimant d'entraînement (2) et une structure d'induction dotée d'un aimant d'induction (3) monté de façon mobile sur une bobine (4), l'aimant d'entraînement (2) et la structure d'induction comprenant une structure de montage permettant de monter l'aimant d'entraînement (2) et la structure d'induction sur la bicyclette en des points où, pendant le fonctionnement normal de la bicyclette, ils se rapprochent et s'éloignent l'un de l'autre de façon répétitive si bien que l'aimant d'entraînement (2), par interaction magnétique, est capable de déplacer l'aimant d'induction (3) par rapport à la bobine (4), **caractérisé en ce que** le générateur (1) comprend également un aimant de réarmement (5) qui influe sur le positionnement de l'aimant d'induction (3) par rapport à la bobine (4) quand l'aimant d'entraînement (2) s'éloigne de l'aimant d'induction (3).

2. Générateur selon la revendication 1, dans lequel l'aimant de réarmement (5) fait partie de la structure d'induction.

3. Générateur selon la revendication 1 ou 2, dans lequel la bobine (4) est disposée de façon circonférentielle autour de l'aimant d'induction.

4. Générateur selon l'une quelconque des revendications 2 à 3, dans lequel l'aimant d'induction (3) comprend deux éléments magnétiques (7) disposés de part et d'autre d'un noyau (6) constitué d'un matériau magnétiquement conducteur.

5. Générateur selon l'une quelconque des revendications 2 à 4, dans lequel l'aimant d'induction (3) est influencé par l'aimant de réarmement (5) par une force magnétique qui est transmise au moins en partie par un conducteur (8) constitué d'un matériau magnétiquement conducteur.

6. Générateur selon la revendication 5, dans lequel le conducteur (8) comprend un élément qui s'étend de part et d'autre de l'aimant d'induction (3).

7. Générateur selon la revendication 6, dans lequel le conducteur (8) comprend un élément qui s'étend de part et d'autre de la bobine (4).

8. Générateur selon l'une quelconque des revendications 2 à 7, dans lequel l'aimant d'induction (3) est monté de manière à tourner autour d'un axe.

9. Générateur selon la revendication 8, dans lequel l'axe est perpendiculaire à la direction du flux magnétique de l'aimant d'induction (3).

10. Générateur selon l'une quelconque des revendications précédentes, dans lequel chaque aimant d'entraînement (2) possède une coercivité magnétique ou une taille supérieure à celle de l'aimant de réarmement (5).

11. Générateur selon l'une quelconque des revendications précédentes, dans lequel l'aimant d'entraînement (2) comprend un système de montage (11) destiné à monter un aimant permanent (9) sur la roue (10) de la bicyclette, le système de montage étant constitué d'un matériau magnétiquement conducteur.

12. Bicyclette munie d'un générateur selon l'une quelconque des revendications 1 à 11.
